# EUROPEAN PATENT SPECIFICATION

(11) **EP 1 878 014 B1**
(45) Date of publication and mention of the grant of the patent: **28.07.2010**
(21) Application number: 06755029.3
(22) Date of filing: 04.05.2006
(51) Int. Cl.: G11B 7/25, G11B 7/244

(54) **FILM FORMING PHOTOSENSITIVE MATERIALS FOR THE LIGHT INDUCED GENERATION OF OPTICAL ANISOTROPY**
FILMBILDENDE LICHTEMPFINDLICHE MATERIALIEN ZUR LICHTINDUZIERTEN ERZEUGUNG OPTISCHER ANISOTROPIE
MATÉRIAUX FILMOGÈNES, PHOTOSENSIBLES, POUR LA GÉNÉRATION D'ANISOTROPIE OPTIQUE INTRODUIT PAR LA LUMIÈRE

(30) Priority: 05.05.2005 EP 05009865
(43) Date of publication of application: 16.01.2008
(73) Proprietor: Fraunhofer-Gesellschaft zur Förderung der angewandten Forschung e.V., 80686 München (DE)
(72) Inventor: ZAKREVSKYY, Yuriy, 14476 Potsdam (DE); FAUL, Charl, Bristol Bristol BS57PF (GB); STUMPE, Joachim, Nauen 14641 (DE)
(74) Representative: Leonhard, Frank Reimund
(86) International application number: PCT/EP2006/062074
(87) International publication number: WO 2006/117403

(56) References cited:
- EP-A- 0 555 793
- EP-A- 1 385 051
- US-A1- 2005 025 422

## Description

The invention relates to ionic self-assembling (ISA) complexes containing photosensitive units which form self supporting films or layers/coatings on a substrate. Non-scattering films are formed from solutions of the water insoluble complexes in organic solvents. Such films or layers can be irradiated in a specific manner, and the irradiated films/layers can be used as polarizing films, photo-alignment films, and devices for reversible optical data storage using the complexes.

A variety of films are known which can be used for a variety of optical properties:

### 1. Light-polarizing films

Polarizing films have been generally produced by incorporating iodine or dichroic dyes as a polarizing element into stretched or oriented films made of polyvinyl alcohol or its derivatives, or into oriented polyene films prepared by dehydrochlorinating a polyvinyl chloride film or dehydrochlorinating a polyvinyl alcohol film to form a polyene structure in the films.

Of these light-polarizing films, those in which iodine is used as a polarizing element are poor in resistance to moisture and heat although they are excellent in the initial polarization performance. Consequently, when they are used for a long period of time in high-temperature and high-humidity conditions, their durability becomes a problem. In order to improve the durability, various methods have been proposed, for example, a method of strengthening by treatment of these films with aqueous solutions containing formalin or boric acid, a method of using as a protecting film a high molecular weight polymer film, which is low in permeability to moisture, and the like. However the durability is still unsatisfactory in high-temperature and high-humidity conditions. Such films are quite thick (some hundreds of micrometers).

Stretched light-polarizing films in which a dichroic dye is used as a polarizing element are superior in the resistance to moisture and heat as compared with those in which iodine is used as a polarizing element. They are however inferior in the polarization performance as compared with the latter. Furthermore, some of them change considerably in color under high-temperature conditions depending upon the dye used. Such stretched films are also quite thick.

A method is also available for manufacturing a light-polarizing film by aligning dichroic dyes in their lyotropic phase in water. This is followed by a drying step to remove the rest of the water and produce highly ordered crystalline film. By this method high dichroic ratios are achieved, and the materials possess comparably high thermal stability. However, these light-polarizing films are poor in resistance to moisture and so need a protection layer. Furthermore, such films are bluish and show cracks due the drying process and the patterning by photoalignment is difficult.

Many difficulties arise when trying to manufacture fine polarizers such as polarizers having a width of not greater than about 200 micrometers. Cutting a dyed alignment film is the only way presently used to prepare such fine polarizers.

It is also known that one can mix a dye with a reactive liquid crystal material and orient this guest-host mixture in a liquid crystal cell or on a substrate with anisotropic layer and stabilizing the order by photo-polymerization. This method further requires that an aligning layer has to be used to be formed on the surface of the glass plates. The degree of alignment of the dye depends upon the degree of the alignment of the liquid crystal material, so the polarizer does not have a sufficient polarizing power due to low alignment of the liquid crystal material. Order in these films is limited by the nematic or smectic LC order. This results in polarizing films with quite low dichroic ratios of about 10. In addition there is a known problem with the alignment of smectic phases.

A photo-alignment technology to prepare a thin photo-aligned polarizer has been proposed. With a birefringent mask, this technique makes the fabrication of multi-domain structures more effective. Thin films of photochemically stable dichroic molecules aligned with light were prepared. Besides advantages of such films with respect to the thickness such polarizers have dichroic ratio of about 10 and are not stable to heat.

Films containing highly oriented dichroic dyes and particularly films which include micropatterned, highly oriented dichroic dyes and their easy manufacture are thus in high demand.

### 2. Photo-alignment layer for liquid crystals

Liquid crystal display (LCD) devices are widely used as displays for mobile terminals, notebook computers, office equipment, video equipment, and the like. This is because LCD devices have advantages of small size, lightweight and low power consumption.

The alignment layer for LCDs and other liquid crystal (LC) devices are usually based on a polyimide film. The alignment of LC is induced by mechanical rubbing or brushing. However, tiny particles and static charges are generated in this process and these have been reported as one of the major causes in defective displays.

In contrast, photo-alignment technology is a clean, non-contact process. Photo-alignment methods include photo-decomposition, photo-polymerization, photocrosslinking, and photo-isomerization reactions. In these methods, optical anisotropy is brought about in an alignment layer by inducing an angular-selective photo-reaction when illuminated by polarized light.

In the photo-decomposition method, liquid crystals are arranged by inducing optical anisotropy using a photo-decomposition reaction that selectively breaks partial bonds of the molecules in a specific direction by the application of linearly polarized ultraviolet light to a polymer layer consisting of a photo-alignment material. The material typically used in this method is polyimide. Although polyimide requires the application of ultraviolet light for a relatively long time to induce liquid crystal alignment, a polyimide alignment layer formed by photo-decomposition has a relatively high thermal stability as compared to other photo-alignment layers fabricated by other methods.

In the photo-polymerization method, liquid crystals are arranged by polymerizing the molecules in a specific direction by applying linearly-polarized light to an alignment layer where polymerization is to occur.

In the photo-isomerization method, cis-trans isomers are formed by polarized light. Thus, liquid crystals are aligned by the direction generated from the transformation of the produced isomers.

The photo-alignment materials are mainly polymers with photo-sensitive groups in the main or side chain. There are also low molecular weight materials that are used in photo-alignment layers. The main problem of these materials is the solubility of the material in the liquid crystals. Applying inter-molecular hydrogen bonding between the molecules to stabilize the film can solve this problem. Low molecular weight materials can also be cross-linked forming a polymeric material.

Although the photo-alignment technique is a non-contact technique for producing alignment layers for liquid crystals and, in addition, provides, in some cases, the possibility of micro-patterning of LC alignment, it still cannot replace alignment by rubbed polyimide in large scale production. The main requirements of materials for photo-alignment layers are high values of anchoring energy, alignment with desirable pretilt angle, and high thermo-stability to be processed in LCD production. The final requirement is to provide the possibility of micro-patterning of the aligned liquid crystals.

### 3. Reversible optical data storage medium

Recording optical data storage media using special light-absorbing substances or mixtures thereof are particularly suitable for use in high density optical data storage media. Now, as before, there is a great interest in optical storage media, which have not only high recording densities but also the possibility of reversible storage of information. Materials for digital and holographic data storage are required, especially materials allowing polarisation holography.

The most promising materials, which satisfy demands for reversible optical data storage, are azobenzene containing polymers or blends of (an) azo-dye(s) with a polymer. But practically all these materials lack in thermal stability of recorded information. An additional disadvantage of polymeric materials is that they are expensive to produce.

Their solubility is often a difficult problem. Systems with better solubility and proper solvents are required and should result in better film forming properties and easier processing.

There is a real need for materials for reversible optical data storage of low cost, high thermal stability, and that are stable to the influence of spurious fields.

### 4. Ionic self-assembled complexes and their advantages

The technique of ionic self-assembly (ISA) (See Adv. Mater., 2003, 15, 673-683) was presented recently. It is a powerful tool to create new nanostructured materials and chemical objects by employment of Coulombic interactions for the self-organization of tectonic units. The ISA strategy is different from the simple coulombic binding of salts because it is usually accompanied by a cooperative binding mechanism, i.e., the first bonds stimulate further binding which propagates towards the final self-assembled structure. The presence of coulombic interactions within an ISA complex stabilizes structural packing and increases the thermostability of the material. The excellent availability of the starting products (charged tectonic units) and the simplicity of synthesis, by neat addition and cooperative stoichometric precipitation with high purity, allow the recombinatorial synthesis of a whole range of functional materials and hybrids with interesting and versatile functions.

It is the problem of the present invention to provide films (self supporting or on a substrate) or layer/coating on such a substrate having a high optical anisotropy or being capable to be converted into a material having such high optical anisotropy which can be used in a variety of optical applications as mentioned above, and which is specifically useful as a polarizing film or layer.

For example, the film or layer should preferably exhibit optical properties in such a way that it can be used as a polarizing element, which has excellent polarizing performance and high hydro and thermal resistance. Moreover, it would be desirable that it can be readily utilized at convenient temperatures. Such a film should be reliable and not subject to the influence of spurious fields.

Preferably, it would be advantageous that such a film may include a micro-pattern, having a minimum width in a film plane of not less then 0,4 micrometer, preferably 1 micrometer and not greater then 500 micrometers.

The present invention provides a type of low molecular weight material based on ionic self-assembled complexes, which
a) has anionic and cationic groups compensated to 1:1 or about 1:1 charge ratio;
b) contains at least one photosensitive unit;
c) contains at least one hydrophobic group;
d) exists in a crystalline, and/or in a liquid crystalline state, and/or amorphous state;
e) is completely or substantially insoluble in water
f) is soluble in organic solvents.

The above material readily forms non-scattering films on substrates or a layer between two substrates when it is applied to a substrate after dissolving it with an organic solvent or by heating it to appropriately viscosity (liquid crystalline or liquid). Moreover, a self-supporting film may be prepared therefrom in specific cases.

Thus, the invention relates to a self-supporting film or to a film or layer provided on a substrate or between two such substrates, made from the above defined material. The film or layer may have polarizing properties, photoalignment properties and/or optical data storage properties, as will be outlined below in detail.

The film or layer according to the present invention is made from a photosensitive material comprising a water insoluble complex having one of the following sum formulae (I) to (IV) 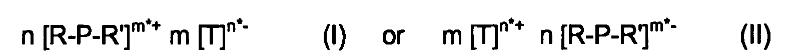 or 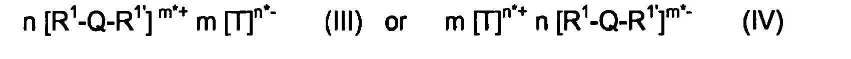 wherein
[R-P-R'] and [R¹-Q-R^{1'}], respectively, are photosensitive tectonic units the photosensitive part of which may undergo a photoreaction, selected from photoisomerizations, photocycloadditions and photoinduced rearrangements, and wherein
P is a group capable of photoisomerization,
Q is a group capable of participating in a photocycloaddition or photoinduced rearrangement reaction, or in a photooxidation reaction,
at least one of R and R' is selected from optionally substituted or functionalized aromatic, preferably aryl-containing groups, and at least one of R and R' is positively or negatively charged, with the proviso that if P is -N=N-, R and R' both are independently selected from optionally substituted or functionalised aromatic, preferably aryl-containing groups, and if P has a different meaning, the other of R and R' can alternatively be or contain a straight or branched aliphatic group, e.g. alkyl, cycloalkyl, or alkenyl,
R¹ and R^{1'} are independently selected either from optionally substituted or functionalized groups, both or at least one of which being an optionally substituted or functionalized aromatic, preferably aryl-containing group while the other alternatively can be or contain a straight or branched aliphatic group, e.g. alkyl, cycloalkyl, or alkenyl, or from such groups which together with Q form an aromatic system, preferably an aryl ring or heteroaryl ring, with the proviso that either at least one of R¹ and R^{1'} is positively or negatively charged or the ring structure and/or a substituent thereon will carry at least one positive or negative charge,
[T] is an organic, tectonic unit carrying at least one positively or negatively charged group and at least one hydrophobic group, and
m, m*, n and n* can be freely selected with the proviso that the values of m and m* are identical or do not differ more than 10% from each other and that the values of n and n* are identical or do not differ more than 10% from each other or that the values of nm* and n*m are identical or do not differ more than 10% from each other, and wherein m, m*, n and n* are preferably selected from or from about 1, 2, 3, 4, 5, 6, 7 or 8,
or comprising a mixture of such complexes.

Complexes as defined above under formulae (I) to (IV) are designated as ionic self-assembled complexes (ISA). Surprisingly, the films made therefrom are usually - in most cases - non-scattering. In the films, the ISA complex containing the photosensitive unit as defined above may be in an oriented or disoriented state.

### 1. Light-polarizing films

In a first embodiment of the invention, the film consisting of or comprising the ISA complex as defined in formulae (I) to (IV) above can be a polarizing film useful as a polarizing element, wherein the film is situated on a substrate.

The films may be prepared from one or more layers consisting of or comprising the said ISA complex according to the invention. In specific cases, layers of said ISA complexes or of material containing said complexes may be separated by protecting layer(s) which comprise(s) any polymer deposited from a solvent in which an ISA complex below the protecting layer would not be soluble. The next layer (above the protecting layer) of an ISA complex will then usually be deposited from a solvent in which the said protecting layer is not soluble. In films having more than one inventive ISA containing layers, the said protecting layer(s) can be omitted in cases where a next layer of an inventive ISA complex is deposited from a solvent in which a previous layer of an inventive ISA complex is not soluble.

The presence of several layers in the said film may be necessary when there is a special need to cover a broader spectral range. There is also the possibility to cover a broad spectral range using dyes absorbing in different spectral ranges in one complex / one film layer.

The present invention also encompasses a method of aligning an ISA complex in a polarizing film comprising minimum one step of macroscopic and/or microscopic irradiation of the said film with a light source with/or without combination of electric, magnetic, surface active field, or thermal treatment, wherein selective variation of the special arrangement or orientation of the said ISA complex occurs and is frozen, in the temperature range of crystalline or liquid crystalline state of the complex, after the irradiation is stopped.

### 2. Photo-alignment layer

According to another embodiment of the invention, the film or layer consisting of or made from ISA complexes as defined in formulae (I) to (IV) is a photo-alignment layer, which usually will have excellent long-term stability to light, heat and moisture.

The photo-alignment layer, which may include a micro-pattern of alignment directions will preferably have a minimum width in a film plane of not less then 1 micrometer and not greater then 500 micrometers.

The present invention also encompasses a liquid crystal display device, which includes a first substrate, a second substrate, a liquid crystal layer between the first and second substrates, and the said photo-alignment layer on the first and/or the second substrate.

The present invention also encompasses a method of fabrication of a liquid crystal display device, which includes preparing a first substrate and a second substrate, forming the said photo-alignment layer, and forming a liquid crystal layer between the first and the second substrates.

The present invention also encompasses a method of aligning the said ISA complex in a photo-alignment layer comprising minimum one step of macroscopic and/or microscopic irradiation of the said layer with a light source with/or without combination of electric, magnetic, surface active field, or thermal treatment, wherein selective variation of the special arrangement or orientation of the said ISA complex occurs and is frozen, in the temperature range of crystalline or liquid crystalline state of the complex, after the irradiation is stopped.

### 3. Optical data storage

According to yet another embodiment of the invention, the self-supporting layer or the layer deposited on a substrate comprising ISA complex as defined in formulae (I) to (IV) is useful as a device for reversible or irreversible optical data storage in which information may be repeatedly stored and erased without decomposition of the device. The device for reversible optical data storage will usually be reliable and not subject to the influence of spurious fields. Preferably, the method for storing and erasing the information can be readily utilized at convenient (e.g. environmental) temperatures. It allows high-density recording.

The photosensitive unit of the ISA complex as defined under formulae (I) to (IV) will be in an oriented or disoriented state, and the information is stored in the film by locally reorienting the said state of the film, whereby the reorienting produces a local variation of the ordering of ISA complex. This may be performed e.g. using an angularly selective photoisomerization of tectonic [R-P-R']- and/or [R¹-O-R^{1'}]- units as defined in formulae (I) to (IV). Examples are photoselection processes of any photosensitive group or photoorientation processes via repeated photoselection events in the steady state of photoisomerization processes such as of azobenzene derivatives.

The present invention also encompasses a method of reversible optical data storage using this device comprising the steps of:
(a) storing information by irradiating the said film with a light source with/or without combination of electric, magnetic, surface active field, or thermal treatment, wherein selective variation of the special arrangement or orientation of the said ISA complex occurs and is frozen, in the temperature range of crystalline or liquid crystalline state of the complex, after the irradiation is stopped. If desired,
(b) the stored information is read from the said device by illuminating the said film with a light source; and if required,
(c) said stored information can be erased by heat and/or by overwriting with the aid of a light source.

Again, this method may be performed using angularly selective photoisomerization of the tectonic units as detailed above.

The efficiency of the device in reversible optical data storage is based on the photo-induction of optical anisotropy, which provides the properties required for a material which is useful as a storage medium. The device is constructed so that in the storage operation the storage medium is locally reoriented and the information is stored by means of a local variation of the molecular ordering.

Irreversible optical data storage may be obtained using angularly selective photocycloaddition, photo-oxidation or photo-fries-reaction of the tectonic [R-R-R']-and/or [R¹-O-R^{1'}] units as defined in formulae (I) to (IV).

Preferably, the ionic self-assembled (ISA) complex
- is a material having relatively low molecular mass;
- has anionic and cationic groups compensated to a charge ratio of 1:1;
- exists in a crystalline, and/or in a liquid crystalline state, and/or amorphous state;
- is soluble in organic solvents which are less polar than water.

Preferably, the photosensitive, tectonic units [R-P-R'] and [R¹-Q-R¹'] , respectively, may be selected under any photosensitive unit meeting the following conditions: It should have an aspect ratio (a length of molecular axis to a length of a molecular perpendicular axis) of not less then 2 and more preferably not less then 3, and it should have an angle between its molecular axis and a direction of transition moment from the ground state to the exited state that is not greater then 20 degrees and preferably close to zero.

Photosensitive units capable of achieving a high dichroic ratio of absorbance under photochemical reaction when they are exposed to polarized light are especially preferable. Photosensitive units which can achieve a dichroic ratio of absorbance at the wavelength of highest absorption of not less then 10 and preferable not less then 20 are especially preferred.

The ISA complexes containing a photosensitive unit in accordance with the present invention may exist in crystalline and/or liquid crystalline state. Existence of the ISA complex in a liquid crystalline (thermotropic as well as lyotropic) state is preferred. Existence of transitions of the ISA complexes to a liquid (isotropic) state is of special preference.

In those embodiments of the invention where the photosensitive, tectonic units of the films are a positive or negatively charged unit of formula [R-P-R'], it is preferred that P is an azo group -N=N-, or comprises more than one such group. However, the invention is not restricted to units [R-P-R'] containing one or more azo groups. For example, P may be -C=N- or, -C=C-. It is preferred in any of the mentioned cases that at least one or the one aromatic moiety which is preferably an aryl moiety is directly bound to the group P.

In those embodiments of the invention where the photosensitive, tectonic units of the films are a positive or negatively charged unit of formula [R¹-Q-R^{1'}], it is preferred that if Q is a group capable of participating in a photocycloaddition, this is a (2+2) addition or a (4+4) addition, and if Q is a group capable of participating in a photoinduced rearrangement, it is preferred that the rearrangement is that of spiropyranes to merocyanines, or the so called Photo-Fries reaction, and at least one of R¹ and R^{1'} is selected from optionally substituted or functionalized groups which comprise at least one aryl moiety or such (a) group(s) which together with Q form an aryl ring or heteroaryl ring. At least one of R¹ and R^{1'} is positively or negatively charged, or the ring structure and/or a substituent thereon will carry at least one positive or negative charge.

In case the photocycloaddition is a (2+2) addition, Q will preferably contain a -C=C- or a -C=N- bond and will more preferably consist of the group -CR²=CR^{2'}-or -CR²=N-wherein R² and R^{2'}are independently selected under H or an alkyl, preferably a C₁-C₄ group. Preferably, Q is part of a conjugated pπ-electron system. Examples for respective compounds are cinnamates, imines, stilbenes, chalcones, or p-phenylene diacrylic esters or amides, wherein at least one of R¹ and R^{1'} can be an optionally substituted or functionalized phenyl or other aryl or heteroaryl ring and the other is also an optionally substituted or functionalized phenyl or other aryl or heteroaryl ring or a carboxylic ester or carbonamide group or a phenyl carbonyl residue. Examples are Ph-CR^{x}=CR^{x}-Ph, Ph-CR^{x}=CR^{x}-Alkyl, Ph-CR^{x}=CR^{x}-C(O)O-(Ph or Alkyl), (Ph or Alkyl)O(O)C-CR^{x}=CR^{x}-C₆H₄-CR^{x}=CR^{x}-C(O)O-(Ph or Alkyl), Ph-CR^{x}CR^{x}C(O)-(Ph or Alkyl) (with C^{x} preferably having the meaning of R² above). All the said groups or residues may be substituted or functionalized, and at least one of R¹ and R^{1'} must carry at least one positive or negative charge. Alternatively, Q may be a -C=C- group which is part of a carbocyclic or heterocyclic, preferably aromatic ring, e.g. in coumarins, in thymine or cytosine derivatives, or in maleinic (maleic) acid anhydride derivatives. According to the above definition, R¹ and R^{1'} are in such cases fused to form a ring structure, together with Q. One or more atoms of this ring structure or, alternatively, a substituent attached thereto may carry the respective at least one positive or negative charge. Again, such compounds, if carrying at least one positive or negative charge, will fall under the scope of the present invention.

In specific cases, when the photocycloaddition is not a (2+2) cycloaddition, Q may comprise more atoms in its backbone and may e.g. be an aromatic C₆ ring which can be fused within an aromatic system or may carry suitable residues at least one of which carries the respective charge(s). One example is an anthracene derivative. Anthracenes are known to undergo a (4+4) cycloaddition whereby carbon atoms 9 and 10 will form bridges to a neighbour atom, resulting in formation of a sandwich-like dimer structure.

Moreover, if Q is a group capable of participating in a photooxidation reaction, [R¹-Q-R^{1'}] may be anthracene or a derivative thereof.

If the photoinduced rearrangement is a Photo-Fries reaction, Q is preferably selected from -OC(O)-, -NR^{x}-C(O)-, -OC(O)NH-, or -HNC(O)NH with R^{x} being preferably alkyl, more preferably having the meaning of R² above. In such cases, R¹ may be or comprise an aromatic system, preferably aryl and most preferably phenyl, the aromatic ring preferably being directly bound to oxygen or nitrogen, but R¹ not being bound to carbon.

R^{1'} may be an aliphatic residue, e.g. straight chain, branched or cyclic alkyl having 1 to for example 24 carbon atoms, bound to carbon or nitrogen.

Of course, complexes (I) to (IV) may carry more than one group P or Q, respectively. For example, the said compounds are intended to include bisazobenzenes or trisazobenzenes as well as diacrylic ester compounds, e.g. p-phenylene-diacrylic esters.

If R, R', R¹ and/or R^{1'} is an aryl group, it may be or may comprise a homocyclic or heterocyclic ring. Optionally, this ring may be fused to an aromatic system, e.g. a naphthalene or anthracene system. Further, the ring can be substituted or functionalized by one or more substituents.

In the definitions given above, the term "functionalized" shall mean substituted by a substituent which implies an additional functionality to the molecule, e.g. a substituent carrying a charge, like a SO₃H group, or a substituent which can provide the capability of polymerization or polyaddition, e.g. a S-H group, or a polymerizable -C=C-group. The term "substituted" shall mean any other substituent.

[T]ⁿ⁻ is preferably selected from units comprising ionic groups selected from -HPO₄⁻ , -PO₄²⁻, -PO₄⁻, -SO₄⁻ -SO₃⁻; -CO₂⁻. [T]ⁿ⁺ is preferably selected from units comprising ionic groups selected under -NR³₃⁺, -C=NR³₂⁺, -C=NR³⁺ where R³ is independently selected from hydrogen or an alkyl, preferably having 1 to 3 carbon atoms, -P⁺R⁴₃, where R⁴ either has the meaning of R³ or, less preferred, is OR³, -N⁺≡N or a N-containing heteratomic ring system. Independent of this, [T]ⁿ- and [T]ⁿ⁺ may contain functional groups which can undergo organic, preferably photochemical reactions, e.g. dyes, photochromic groups, or photo-polymerizable groups like acrylate, methacrylate, epoxide groups. Further (alternatively or in addition) [T]ⁿ⁺ and [T]ⁿ⁻ can be selected from charged surfactants containing an azobenzene group.

Of course, the charges on R, R', R¹ and R^{1'} may likewise be provided by the presence of any of the ionic groups defined for [T]ⁿ⁺ and [T]ⁿ⁻ above.

The ionic groups of the units [T] as well as those groups which imply positive or negative charges to [R-P-R'] and [R¹-Q-R^{1'}] may be bound to the remaining of the respective units via spacer groups. Such a spacer group can be different for each ionic group and can preferably be selected, independently with each other, from -CR^{a}₂-, -CR^{a}₂O-, -COO-, -CONH-, where R^{a} is selected under H, CH₃ or alkyl chain having a carbon atom number between 3 and 8, where the methyl or higher alkyl group can optionally contain heteroatoms, for example halogen.

In some cases an ISA complex containing a photosensitive(s) unit may be represented as a mixture of minimum two complexes described above. The only restriction is that the ionic and counter-ionic part within the obtained complex should be approximately or specifically 1:1 charge ratio. Such mixtures have special importance for light-polarizing films when wide range coverage of the spectrum is a crucial point.

In one embodiment of the invention, the film as described above consists merely of the ISA complex(es) as defined. In another embodiment, it may comprise at least one additive which modifies the properties of the material. This additive may be selected from organic polymers, compounds which have film forming abilities, plasticizers, liquid crystals and photosensitive compounds differing from those as defined in claim 1. An organic polymer may for example be added in order to modify the film forming properties, the glass transition properties, the flexibility, the suppleness, or the like. In other cases, the ISA complex according to any of formulae (I) to (IV) may be incorporated into a "common" polymer or plastics film in order to modify the optical properties thereof. In the former case, it is preferred that up to about 20, preferably to about 10, and more preferably to about 2-5 % by weight polymer are incorporated into the film. In the latter case, the organic polymer may be present in an amount up to e.g. 80, about 95, or even 98-99 % by weight.

Without wanting to be bound to any theory, the first of the above complex/polymer films as described above could be defined to be a film wherein the ISA complex constitutes a host matrix, while the latter could be defined to be a film wherein the polymer constitutes the said host matrix.

In specific embodiments of the invention, more than one film or layer as described above is present in a stack of two, three or even more layers. These layers may face each other directly, or they may be divided by (an)other layer(s), as outlined above (see e.g. explanation under the first head line "light-polarizing films" and below). Irradiation of said layers in order to provide a proper alignment can be performed on all said layers together. Alternatively, each layer may be irradiated separately. This may have advantages in case layers covering lower layers are not sufficient light transmitting. Moreover, and specifically, the method of separately irradiating the layers gives the opportunity to irradiate different layers using different conditions, e.g. in respect to incident angle of the light, to light intensity, or to areas to be illuminated.

The complexes having structures according to formulae (I) to (IV) can easily be prepared from starting salt materials. Conveniently, a salt comprising the charged [R-P-R'] or [R¹-C-R^{1'}] unit, and a salt comprising the oppositely charged [T] unit are separately dissolved in water. Next, the water solutions are combined, which is preferably performed such that the units of the complex to be prepared are present in a molar amount corresponding to the sum formula of compounds (I) to (IV). For example if a complex having the structure [R-P-R']²⁺ 2 [T]⁻ is to be prepared, a molar ratio of 1:2 of the [R-P-R']²⁺ salt to the [T]⁻ salt will be employed. Although deviations from this ratio are possible to some extent and in some cases, it is preferred that they should generally not be too large in order to avoid the possibility that the complex remains dissolved after combining the solutions, due to the formation of e.g. micelles of the hydrophobic unit. At least if this condition is met, the complex will precipitate from the aqueous solution. Likewise, a complex mixture may be obtained by mixing minimum two solutions of different complexes in organic solvents. The resulting solution can be used as it is, or the resulting complex can be obtained by evaporation of the solvent(s).

The complex or mixture of complexes having one or more of formulae (I) to (IV) can usually be recovered from the aqueous mixture in 100 % or almost 100% yield. After treating it as required, e.g. by removing residual salts and/or moisture (active or passive drying), it can be redissolved in a suitable organic solvent. This solvent will be selected by a skilled person without difficultly and can e.g. be an alcohol, ether, chloroform, THF, or the like. If desired, an additive as detailed above may be added, and the solution (more or less viscous) is brought onto a substrate in order to obtain a film (self supporting or not self supporting) or layer. This step may be performed using general techniques, e.g. spin coating, printing, casting, doctor's blading or dipping. Alternatively, the complex may be warmed or heated to become viscous, either alone or in combination with the additive as detailed above, and is cast or otherwise brought into film form. Subsequently, the film or layer is dried or cooled, if required.

The invention shall now be explained in detail in respect to the properties of the films.

### 1. Light-polarizing films

The light-polarizing film of the invention constitutes of minimum one layer on a transparent support having a planar surface. The support can be a polymer film, a glass plate, or transparent electrode. The said layer comprises an ISA complex containing photosensitive unit(s) in an oriented or disoriented state. Layers of ISA complexes may be separated by a protecting layer, which comprises any polymer deposited from a solvent in which ISA complexes are not soluble. The said protecting layer can be omitted e.g. if a next layer of an ISA complex is deposited from a solvent in which a previous layer of an ISA complex is not soluble. Presence of several layers in the said film can be necessary when there is a special need to cover broader spectral range. Using ISA complexes containing dyes absorbing in different spectral ranges or mixture of ISA complexes allows covering a broad spectral range.

A layer of an ISA complex is produced from solution of the ISA complex in an organic solvent using well known deposition techniques, e.g. printing, spin-coating or casting method. A layer of an ISA complex can be also obtained by pressing the ISA complex between two substrates in appropriate viscous (liquid crystalline or liquid) state.

Aligning of an ISA complex(es) in a light-polarizing film comprises minimum one steps of macroscopic and/or microscopic irradiating the said film with a light source with/or without combination of electric, magnetic, surface active field, or thermal treatment, wherein selective variation of the special arrangement or orientation of the said ISA complex occurs and is frozen, in the temperature range of crystalline or liquid crystalline state of the complex, after the irradiation is stopped. In some cases if a polarizing film consists of minimum two layers the alignment can be made for each layer independently after its deposition.

The thickness of the light-polarizing film typically falls between about 10 nanometers and 10 micrometers. The light-polarizing film may typically have a peak of absorption at between 400 to 800 nm. Alternatively, light-polarizing film may have a peak of absorption in the NIR, or in the IR. The dichroic ration at the wavelength of peak absorption should be not less then 10 and preferably not less then 20.

In specific cases, the peak of absorption may be in the UV.

A film exhibiting optical anisotropy in the UV and in the visible range (birefringence), but without considerable absorption in the visible range, could be used as a retarder.

When the light-polarizing film includes micro-pattern, having a minimum width in the film plane of 1 micrometer through 500 micrometers, the preferred dichroic ratio is not less then 10 and more preferably not less then 20. The pixilated regions of this film can be different in size and their relative positions.

A primary application of the films of this invention is as a part of liquid crystal display devices. The liquid crystal display device is not limited except that the liquid crystal display devices should include a polarizer that itself includes a light-polarizing film of this invention or a micro-polarizer, which contains a micro-patterned light-polarizing film of this invention.

In one particular application a polarizer that itself includes a light-polarizing film of this invention or a micro-polarizer, which contains a micro-patterned light-polarizing film of this invention may be positioned between a liquid crystal layer and a substrate of a liquid crystal cell and serve in addition to polarizing properties as an alignment layer for a liquid crystal.

A described above, the light polarizing films of the invention is easily manufactured to have an appropriate thickness and high dichroic ratio. The polarizer or micro-polarizer and the liquid crystal display device, which utilize them, have desirable contrast properties.

With the present invention, it is possible to provide polarization holograms, using holographic methods.

### 2. Photo-alignment layer

To form a photo-alignment layer using an ISA complex containing photosensitive unit as a photo-alignment material, the ISA complex is uniformly coated on a substrate by spin-coating or casting method from solution of the ISA complex in an organic solvent. Aligning of an ISA complex in a photo-alignment layer comprises minimum one steps of macroscopic and/or microscopic irradiating the said layer with a light source with/or without combination of electric, magnetic, surface active field, or thermal treatment, wherein selective variation of the special arrangement or orientation of the said ISA complex occurs and is frozen, in the temperature range of crystalline or liquid crystalline state of the complex, after the irradiation is stopped. The light from the light source may be non-polarized light, linearly polarized light, circularly polarized light, particularly polarized light or the like, depending on the alignment structure to be implemented. When the photo-alignment layer includes micro-patterns, the pixilated regions of this layer can be different in size and their relative positions having a minimum width in the film plane of 1 micrometer through 500 micrometers.

A photo-alignment layer according to the present invention enables improvement of the optical and thermal stability of the liquid crystal alignment, pre-tilt stability against electrical stress, and improved shock-resistance. Moreover, the principles of the present invention enable improved display quality and an improved LCD display manufacturing method. The photo-alignment layer according to the present invention is able to align liquid crystals in a LC cell or a thin film of LC above such oriented or patterned film.

### 3. Optical data storage

The device for reversible optical data storage contains a film made of an ISA complex containing photosensitive unit as a storage medium, preferably supported by one or two transparent substrate, such as glass sheets. The device is set up to store information by means by a local variation of the ordering of the ISA complex in the temperature range of crystalline or liquid crystalline state of the complex. The information or image is written by macroscopically or microscopically illuminating the film with light source, which is absorbed by photosensitive units in the film, with/or without combination of electric, magnetic, surface active field, or thermal treatment. The ordering of the ISA complex appears to be stable over the long term and results in a local anisotropy in the optical properties of the film, in particular dichroism and birefringence can be observed. The information can be read with another light source without disturbing the stored information.

The film of an ISA complex containing photosensitive units can be deposited on a substrate by spin-coating or casting method from a solution of an ISA complex in an appropriate organic solvent. The thickness of the film typically falls between about 10 nanometers and 10 micrometers.

It is also possible to write a grating on the film with a line separation of approximately 0.5 micron. This indicates that the resolution limit of the recording is established by the optics rather than the recording medium.

The optical information can be erased from the film either thermally or optically. The molecules of an ISA complex can be made to adopt random orientation by heating the film to isotropic phase of the ISA complex. The information can be erased at lower temperatures by overwriting with light in appropriate geometry of irradiation to randomize the molecular orientations. The new information can be also written by the method described above directly on the previous set without an intermediate erasing step. The preceding information is completely erased on the following writing procedure.

The present invention shall now be further explained by way of non-limiting examples.

### EXAMPLE 1

The ISA complex EO+C12D was prepared by 1:1 charge ratio mixing of two aqueous solutions of Ethyl Orange sodium salt and Didodecyldimethylammonium bromide (1 mg/ml). The precipitated complex was then washed several times with water to remove residual salt. The structure of the complex is as follows:

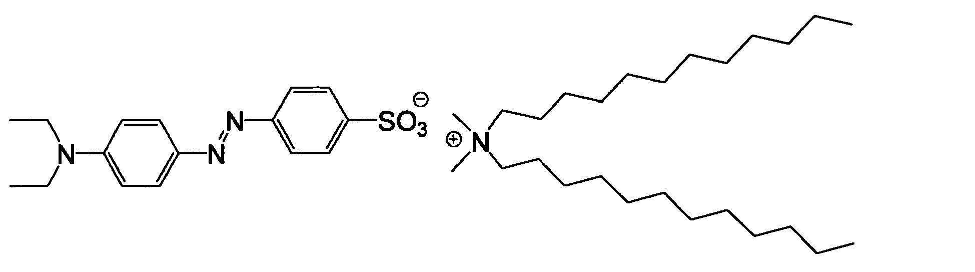

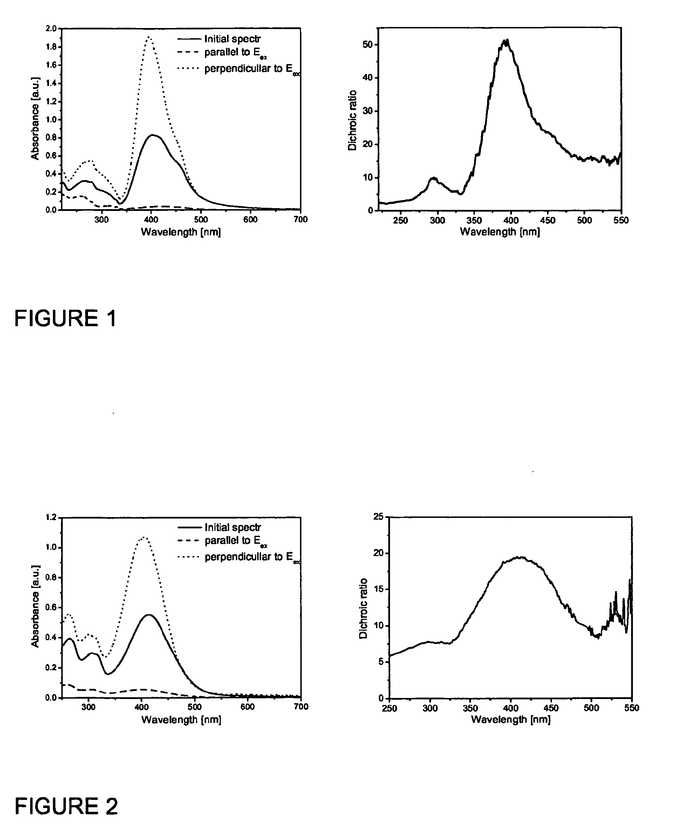

Non-scattering films of the complex were prepared by spin-coating from a solution of the complex in chloroform (5 - 100 g/l).The films were irradiated with linearly polarized light of an Argon laser (λ=365mn and λ =488nm). After an exposure dose of 1 kJ cm⁻² the induced anisotropy in the film reaches its maximum. The dichroic ratio in the maximum of absorbance varies between 30 and 50. The discrepancy in the measurements is attributed to the difficulty of measurement of such high anisotropy of absorbance, and could even be higher. Changes of the spectra of a film of the complex before and after irradiation, and spectral distribution of dichroic ratio are presented in Fig. 1. No fatigue of induced dichroic ratio was observed after exposure of the films to daylight and/or after thermal annealing at 150°C for 24 hours. There is even a small increase in the anisotropy.

### EXAMPLE 2

The ISA complex DY50+C12D was prepared by 1:1 charge ratio (i.e. in a molar ratio of 1:4) mixing of two aqueous solutions of Direct Yellow 50 and Didodecyldimethylammonium bromide (1 mg/ml). The precipitated complex was then washed several times with water to remove residual salt. The structure of the complex is as follows:

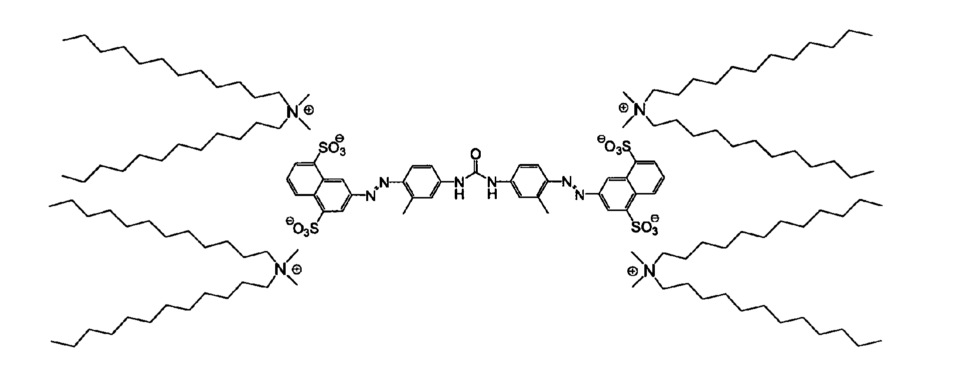

Non-scattering films of the complex were prepared by spin-coating from the solution of the complex in chloroform (5 -100 g/l). The films were irradiated at 100°C with linearly polarized light of an Argon laser (λ =365mn and λ =488nm). After an exposure dose of 1 kJ cm⁻² the induced anisotropy in the film reaches its maximum. The dichroic ratio in the maximum of absorbance is approximately 20. Changes of the spectra of a film of the complex before and after irradiation, and spectral distribution of dichroic ratio are presented in Fig. 2. No fatigue of induced dichroic ratio was observed after exposure of the films to daylight and/or after thermal annealing at 200°C for 24 hours.

### EXAMPLE 3

The ISA complex EO+C16D was prepared by 1:1 charge ratio mixing of two aqueous solutions of Ethyl Orange sodium salt and Dihexadecyldimethylammonium bromide (1 mg/ml). The precipitated complex was then washed several times with water to remove residual salt. The structure of the complex is as follows:

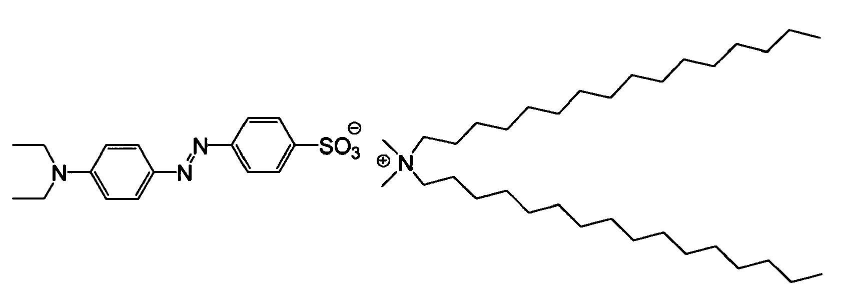

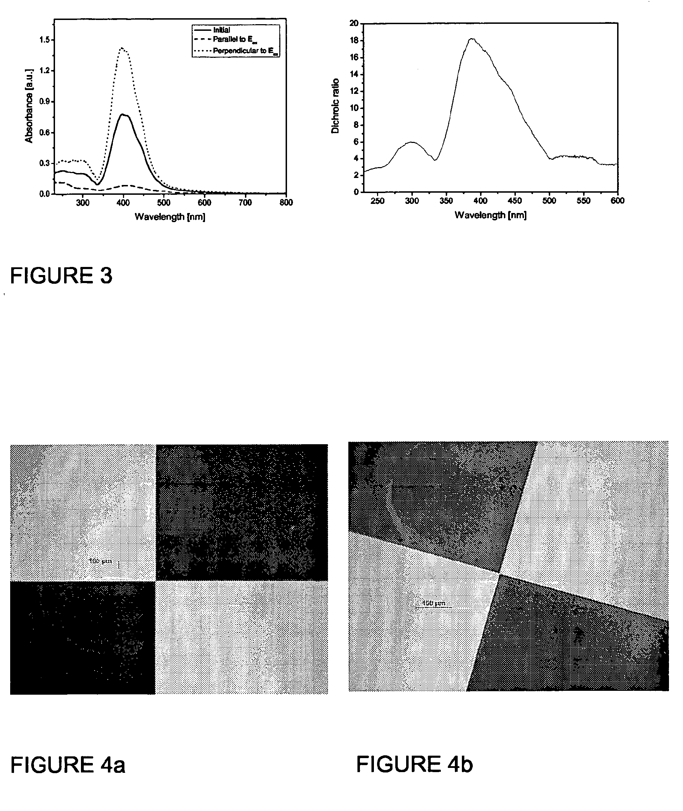

Non-scattering films of the complex were prepared by spin-coating from a solution of the complex in chloroform (5 - 100 g/l). The films were irradiated with polarized light of an Argon laser (A =488nm). After an exposure dose of about 3 kJ cm⁻² the induced anisotropy in the film reaches its maximum. The dichroic ratio in the maximum of absorbance varies between 15 and 20. Changes of the spectra of a film of the complex before and after irradiation, and spectral distribution of dichroic ratio are presented in Fig. 3. No fatigue of induced dichroic ratio was observed after exposure of the films to daylight and/or after thermal annealing at 140°C for 24 hours. There is even a small increase in the anisotropy.

### EXAMPLE 4

The film of EXAMPLE 3 was irradiated through the mask with polarized light of an Argon laser (λ =488nm) at the angle of 45° to the first irradiation. Photos of the irradiated areas are shown in Fig. 4 using a polarising microscope with crossed polarizers.

### EXAMPLE 5

Using the film of EXAMPLE 1 a combined liquid crystal cell was prepared. The second substrate was rubbed polyimide layer. The cell was assembled to get twist angle of a liquid crystal of 90°. The thickness of the cell was 10 µm. The cell was filled with liquid crystal ZLI-4801-000 (Merck) at room temperature. The twist of the liquid crystal was observed to be 90° with uniform mono-domain alignment over the irradiated area.

### EXAMPLE 6

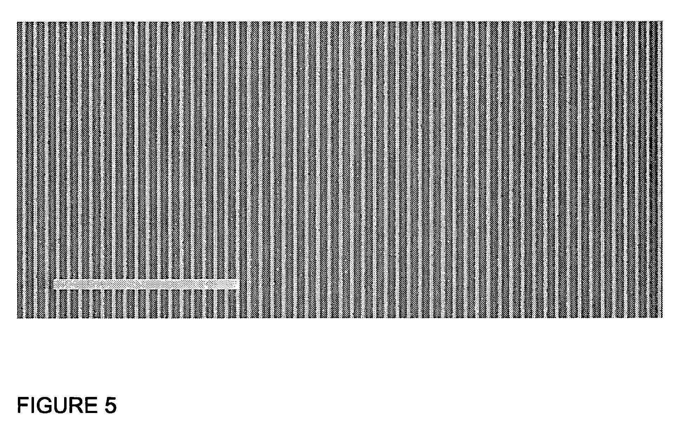

Films of the material of EXAMPLE 3 were prepared by spin-coating from a solution of the complex in chloroform (25 g/l). Films thickness was in the range of 100 - 200 nm. The films were irradiated with two circularly polarized interfering beams of an Argon laser (A =488nm). Exposure dose was 1 kJ cm⁻². The picture of obtained pattern observed in polarizing microscope is shown in Fig. 5 (Bar: 25µm). A diffraction efficiency of 6-10 % was obtained. No fatigue of the diffraction efficiency was observed after exposure of the films at daylight and/or after thermal annealing at 140°C for 24 hours.

## Claims

1. Self supporting or substrate-supported film or layer of a photosensitive material comprising a water insoluble complex having one of the following sum formulae (I) to (IV) 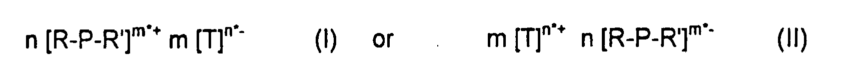 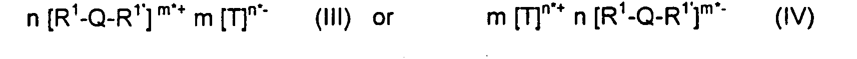 wherein
[R-P-R'] and [R¹-Q-R^{1'}], respectively, are photosensitive tectonic units the photosensitive part of which may undergo a photoreaction, selected from photoisomerizations, photocycloadditions and photoinduced rearrangements, and wherein
P is a group capable of photoisomerization,
Q is a group capable of participating in a photocycloaddition or photoinduced rearrangement reaction, or in a photooxidation reaction,
at least one of R and R' is selected from optionally substituted or functionalized aromatic groups, and at least one of R and R' is positively or negatively charged, with the proviso that if P is -N=N-, R and R' both are independently selected from optionally substituted or functionalised aromatic groups, and if P has a different meaning, the other of R and R' can alternatively be or contain a straight or branched aliphatic group,
R¹ and R^{1'} are independently selected either from optionally substituted or functionalized groups, both or at least one of which being an optionally substituted or functionalized aromatic, group while the other alternatively can be or contain a straight or branched aliphatic group, or from such groups which together with Q form an aromatic system, with the proviso that either at least one of R¹ and R^{1'} is positively or negatively charged or the ring structure and/or a substituent thereon will carry at least one positive or negative charge,
[T] is an organic, tectonic unit carrying at least one positively or negatively charged group and at least one hydrophobic group, and
m, m*, n and n* can be freely selected with the proviso that the values of m and m* are identical or do not differ more than 10% from each other and that the values of n and n* are identical or do not differ more than 10% from each other; or that the values of n·m* and n*·m are identical or do not differ more than 10% from each other;
or comprising a mixture of such complexes.

2. Film or layer according to claim 1, wherein
(a) group P or group Q in formulae (I) to (IV) are selected from. -N=N-, -CR²=CR^{2'}- with R², R^{2'} being independently selected from H, CN or C₁-C₄ alkyl, or
(b) wherein group P or group Q in formulae (I) to (IV) are a group containing more than one -N=N- and/or -CR²=CR^{2'}- moieties in a electron-conjugated system, or
(c) wherein R¹ and R^{1'} are independently selected from entities having more than one optionally substituted or functionalized aliphatic group and/or optionally substituted or functionalized aryl-containing groups and entities having more than one group which together with one or more groups Q form an aryl ring or heteroaryl ring.

3. Film or layer according to claim 1 or 2, wherein one of R or R' or of R¹ or R^{1'} contains at least one additional moiety comprising one or more -N=N-, and/or -CR²=CR^{2'}- groups.

4. Film or layer according to any of claims 1 to 3 wherein [T] contains one or more than one groups, and the or each of said hydrophobic groups contain at least 6, preferably at least 10 carbon atoms, and/or wherein m, m*, n and n* are selected from or from about 1, 2, 3, 4, 5, 6, 7, or 8.

5. Film or layer according to claim 4, wherein the hydrophobic group(s) is/are (a) straight or branched hydrocarbon chain(s), selected from optionally substituted or functionalized alkyl, alkenyl, aryl, or arylalkyl, or is/are (an) polyalkylenoxide chain, preferably a polyethylenoxide or polypropylenoxide chain.

6. Film or layer according to any of the preceding claims, wherein in formulae (I) or (II), R and R' are both aryl moieties, preferably directly bound to the group P, and/or wherein in formulae (III) or (IV), R¹ and R^{1'} are selected from aryl moieties directly attached to Q, and -C(O)O- and -(CO)NR³ groups wherein R³ is H or a optionally substituted alkyl or aryl group.

7. Film or layer according to any of claims 1 to 5, wherein the at least one photosensitive compound is selected from monoazo compounds, bisazo compounds, trisazocompounds, and preferably from azobenzenes, bisazobenzenes, trisazobenzenes, and further from stilbenes, cinnamates, imines, anthracenes, coumarines, chalcones, p-phenylene diacrylates or diacrylamides, thymin derivatives, cytosine derivatives, merocyanines/spiropyranes, derivatives of maleinic acid anhydride, and anthracene.

8. Film or layer according to any of the preceding claims, wherein [T]ⁿ- comprises ionic groups selected from -P(OH)O₃⁻ , -PO₄²⁻, -PO₄⁻, -SO₄⁻, -SO₃⁻, -CO₂⁻-, or [T]ⁿ⁺ comprises ionic groups selected from -NR³₃⁺, -C=NR³₂, -C=NR³, where R³ is hydrogen or an alkyl having 1 to 3 carbon atoms, -P⁺R⁴₃, where R⁴ either has the meaning of R³ or is OR³, N⁺≡N, or a N-containing heteratomic ring system.

9. Film or layer according to any of the preceding claims, wherein [T]ⁿ⁺ or [T]ⁿ⁻ is selected from a charged amphiphile, selected under fatty acids, partially hydrolyzed triglycerides, tetraalkyl ammonium or protonated trialkyl ammonium compounds having one, two or three alkyl groups with at least 6 carbon atoms, hydrophobic dyes, and/or wherein [T]ⁿ⁺ or [T]ⁿ⁻ may contain a functional group capable of undergoing organic, preferably photochemical reactions, more preferably selected from dyes, photochromic groups, or photopolymerizable groups, most preferably selected from acrylates, methacrylates and epoxides, and/or wherein [T]ⁿ⁺ or [T]ⁿ⁻ is selected from charged surfactants containing an azobenzene group.

10. Film or layer according to any of the preceding claims, comprising at least one additive which modifies the properties of the material, preferably selected from organic polymers, compounds which have film forming abilities, plasticizers, liquid crystals and photosensitive compounds differing from those as defined in claim 1, wherein the additive, if being an organic polymer, is preferably present in an amount up to about 95 % by weight of the photosensitive material.

11. Film or layer according to any of the preceding claims, wherein at least two complexes selected from those of formulae (I) to (IV) are present in the film.

12. Film or layer according to any of the preceding claims which is patterned or structured.

13. Film or layer according to any of the preceding claims having a thickness between about 10 nm to about 40 µm, preferably to about 10 µm.

14. Film or layer according to any of the preceding claims, wherein the film or layer is a stack of films or layers comprising more than one film or layer of the photosensitive material as defined in claim 1, wherein either said films or layers face each other directly, or each of the photosensitive material containing film or layer is separated from another such film or layer by a protecting layer, the protecting layer comprising of or consisting of any polymer deposited from a solvent in which the complex(es) of formulae (I) to (IV) as used in the film or layer below the protecting layer is not soluble, and the film or layer of the photosensitive material as defined in claim 1 which is located above the protecting layer being deposited from a solvent in which the said protecting layer is not soluble.

15. Film or layer according to any of the preceding claims, the material of which being capable to change at least one optical property, preferably selected from birefringence, dichroism, refraction, or fluorescence anisotropy, upon irradiation with light.

16. Film or layer according to claim 15, irradiated such that its optical properties are either
(a) homogeneous through the material or
(b) varied through the material or through restricted areas thereof.

17. Film or layer according to claim 16, variant (b), wherein optical properties are modulated in one, two or three dimensions including modulation in the direction perpendicular to the film plane, in any direction in the film plane or along the axis tilted to the film plane.

18. Film or layer according to any of claims 15 to 17 having the properties of a light-polarizing film or of a photo-alignment layer for a liquid crystal, the film being provided on a transparent support, the support being preferably selected from a polymer film, a glass plate, or a transparent electrode.

19. Film or layer according to claim 18 wherein the light-polarizing film has a peak of absorption at between 400 to 800 nm, or in the NIR, or in the IR, or in the UV, and/or a dichroic ratio at the wavelength of peak absorption is not less then 10.

20. Film or layer according to any of claims 18 or 19 having a micro-pattern of minimum width in the film plane of at least 0.4 micrometer, preferably 1 micrometer through 500 micrometers wherein the pixilated regions of this film can be different in size and their relative positions.

21. Film or layer according to any of claims 15 to 17 having the properties of an optical data storage medium, the film or layer preferably provided on a transparent substrate that has optionally already been coated with one or more reflecting layers and onto whose surface a photo-recordable information layer, optionally one or more reflecting layers and optionally a protective layer or an additional substrate or a top layer are applied.

22. Film or layer according to claim 21 wherein the data in the storage medium can be recorded on and read using a light, preferably a laser light such that in the storage operation the storage medium is locally reoriented and the information is stored by means of a local variation of the molecular ordering.

23. Method for the preparation of a film or layer according to any of the preceding claims, comprising the following steps:
(a) dissolving a complex having any of formulae (I) to (IV) as defined in claim 1 or a mixture of such complexes, in an organic solvent wherein it is soluble, or heating it until it is in a viscous state,
(b) preparing a homogeneous film from the solution or viscous material obtained in step (a), either in the form of a continuous film or having a predesigned pattern, and
(c) drying or cooling said film.

24. Method for the preparation of a film or layer according to claim 10 or any claim depending thereon, comprising the following steps:
(a) dissolving a complex having any of formulae (I) to (IV) as defined in claim 1 or a mixture of such complexes, in an organic solvent wherein it is soluble, or heating it until it is in a viscous state,
(b) mixing the solution or viscous material obtained in step (a) with the said additive,
(c) preparing a homogeneous film from the mixture obtained in step (b), preferably by spin coating, printing, casting, doctor's blading or dipping, either in the form of a continuous film or having a predesigned pattern, and
(d) drying or cooling said film.

25. Method according to any of claims 23 or 24, wherein the complex(es) used in step (a) is/are obtained by the following steps:
(e) separately dissolving at least one salt of any of the photosensitive tectonic units defined in formulae (I) to (IV) and at least one salt of any of the tectonic units [T] defined in formulae (I) to (IV) in water,
(f) combining the said solutions in a molar ratio which corresponds to the complex(es) of formulae (I) to (IV) to be obtained, and
(g) recovering the solid complex or mixture of complexes of any of formulae (I) to (IV) from said solution.

26. Method for the preparation of film or layer according to claim 16, variant (a), comprising preparing a film as defined in any of claims 23 to 25 and irradiating said film or a part of it with a homogeneous light field.

27. Method for the preparation of a film or layer according to claims 16, variant (b), and 17, comprising preparing a film as defined in any of claims 23 to 25 and irradiating said film or part of it with an inhomogeneous light field, provided by a mask or by an interference pattern of at least two intersecting coherent beams.

28. Method according to claims 26 or 27, wherein either the wavelength, the irradiation time, the number of the irradiating beams and/or the polarization, the intensity, the incidence angle of at least one irradiating beam is varied to control the direction, the value and/or the modulation type of the induced optical anisotropy.

29. Method according to claims 27 or 28, further comprising varying the mask spacing or the period, intensity or polarization of the interference pattern in order to control the spatial modulation of optical anisotropy.

30. Method for the preparation of a film or layer according to claims 16 variant (b) and 17, comprising preparing a film as defined in any of claims 23 to 25 and inhomogeneously irradiating said film, preferably through a mask, with a focused beam, with near field, or with an interference pattern of at least two intersecting coherent beams.

31. Method according to claim 26 or 30, wherein the irradiation is macroscopic and/or microscopic and wherein irradiation is with/or without combination of electric, magnetic, surface active field, or thermal treatment, wherein selective variation of the special arrangement or orientation of the said ionic self-assembled complex occurs and is frozen, in the temperature range of crystalline or liquid-crystalline state of the complex, after the irradiation is stopped.

32. Method according to any of claims 23 to 25, wherein the film consists of minimum two photosensitive layers and optionally one or more protecting layers and wherein the alignment is made for each layer independently after its deposition.

33. Method according to any of claims 23 to 25, wherein the film consists of minimum two photosensitive layers and optionally one ore more protecting layers and wherein the alignment of all layers is made at the same time by irradiating them together.

34. Use of a film or layer as claimed in any of claims 1 to 22 as a photosensitive medium, polarization element, light retarder element, photo-alignment layer for a liquid crystal, optical element, functional surface, diffractive element, focusing element or any combination of said elements.

35. Use of a material as claimed in claim 16 wherein the light-induced property is reversible, as an element for optical or optical/thermal switching, or wherein the light-induced property is reversible or irreversible, as a medium for real-time reversible and irreversible holography, digital optical data storage or optical information processing.

36. Use according to claim 34, wherein the photosensitive medium is a medium for irreversible or reversible optical data storage.

37. Use according to claim 35, wherein written information can be eliminated by irradiation or heating, whereafter another writing cycle is possible.

38. Method of reversible optical data storage in an optical data storage medium of claim 21 comprising the steps of:
(a) storing information by irradiating the said film with a light source with/or without combination of electric, magnetic, surface active field, or thermal treatment;
(b) reading stored information from the said device by illuminating the said film with a light source;
(c) erasing said stored information by heat and/or by light.

## Patentansprüche

1. Selbsttragender oder substratgestützter Film oder selbsttragende oder substratgestützte Schicht eines photoempfindlichen Materials, enthaltend einen wasserunlöslichen Komplex mit einer der nachstehenden Summenformeln (I) bis (IV) 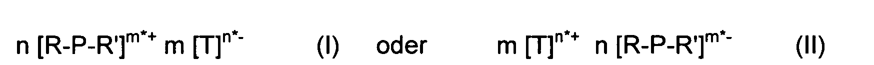 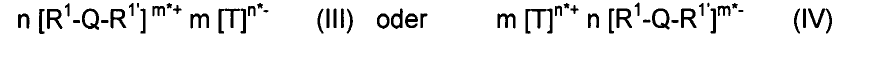 worin
[R-P-R'] und [R¹-Q-R^{1'}] jeweils photoempfindliche tektonische Einheiten darstellen, deren photoempfindlicher Teil eine Photoreaktion eingehen kann, ausgewählt unter Photoisomerisierungen, Photocyloadditionen und photoinduzierten Umlagerungen, und worin
P eine einer Photoisomerisierung zugängliche Gruppe ist,
Q eine Gruppe ist, die Partner in einer Photocycloadditions- oder einer photoinduzierten Umlagerungsreaktion oder in einer Photooxidationsreaktion sein kann,
mindestens einer der Reste R und R' ausgewählt ist unter gegebenenfalls substituierten oder funktionalisierten aromatischen Gruppen, und mindestens einer der Reste R und R' positiv oder negativ geladen ist, wobei dann, wenn P -N=N-, ist, R und R' beide unabhängig voneinander unter gegebenenfalls substituierten oder funktionalisierten aromatischen Gruppen ausgewählt sind, und dann, wenn P eine andere Bedeutung hat, der andere der Reste R und R' alternativ eine geradkettige oder verzweigte aliphatische Gruppe sein oder enthalten kann,
R¹ und R^{1'} unabhängig voneinander entweder unter gegebenenfalls substituierten oder funktionalisierten Gruppen, die beide oder von denen mindestens eine eine gegebenenfalls substituierte oder funktionalisierte aromatische Gruppe sind/ist, während die andere alternativ eine geradkettige oder verzweigte aliphatische Gruppe sein kann, oder unter solchen Gruppen ausgewählt sind, die zusammen mit Q ein aromatisches System bilden, unter der Bedingung, dass entweder mindestens einer der Reste R¹ und R^{1'} positiv oder negativ geladen ist oder die Ringstruktur und/oder ein Substituent daran mindestens eine positive oder negative Ladung trägt,
[T] eine organische, tektonische Einheit ist, die mindestens eine positiv oder negativ geladene Gruppe und mindestens eine hydrophobe Gruppe trägt, und
m, m*, n und n* unter der Bedingung frei wählbar sind, dass die Werte von m und m* identisch sind oder nicht mehr als 10% voneinander abweichen und dass die Werte von n und n* identisch sind oder nicht mehr als 10% voneinander abweichen, oder dass die Werte von n·m* und n*·m identisch sind oder nicht mehr als 10% voneinander abweichen,
oder enthaltend eine Mischung solcher Komplexe.

2. Film oder Schicht nach Anspruch 1, worin
(a) die Gruppe P oder die Gruppe Q in den Formeln (I) bis (IV) ausgewählt ist unter -N=N-, -CR²=CR^{2'}-, wobei R² , R^{2'} unabhängig voneinander ausgewählt sind unter H, CN oder C₁-C₄-Alkyl, oder
(b) worin die Gruppe P oder die Gruppe Q in den Formeln (I) bis (IV) eine Gruppe ist, die mehr als eine -N=N- und/oder -CR²=CR^{2'}-Einheit in einem elektronenkonjugierten System aufweist, oder
(c) worin R¹ und R¹_{,} unabhängig voneinander unter Einheiten, die mehr als eine gegebenenfalls substituierte oder funktionalisierte aliphatische Gruppe enthalten, und/oder gegebenenfalls substitutierten oder funktionalisierten arylhaltigen Gruppen und Einheiten mit mehr als einer Gruppe, die zusammen mit einer oder mehreren Gruppen Q einen Arylring oder Heteroarylring bildet, ausgewählt sind.

3. Film oder Schicht nach Anspruch 1 oder 2, worin einer der Reste R oder R' oder der Reste R¹ oder R^{1'} mindestens eine zusätzliche Einheit enthält, die eine oder mehrere -N=N- und/oder -CR²=CR^{2'}-Gruppen aufweist.

4. Film oder Schicht nach einem der Ansprüche 1 bis 3 worin [T] eine oder mehr als eine Gruppe enthält und diese oder jede dieser hydrophoben Gruppen mindestes 6, vorzugsweise mindestens 10 Kohlenstoffatome aufweist und/oder worin m, m*, n und n* ausgewählt sind unter oder unter ungefähr 1, 2, 3, 4, 5, 6, 7 oder 8.

5. Film oder Schicht nach Anspruch 4, worin die hydrophobe(n) Gruppe(n) (eine) geradkettige oder verzweigte Kohlenwasserstoffkette(n), ausgewählt unter gegebenenfalls substituiertem oder funktionalisiertem Alkyl, Alkenyl, Aryl oder Arylalkyl, oder (eine) Polyalkylenoxid-Kette(n) ist/sind, vorzugsweise eine Polyethylenoxid- oder Polypropylenoxid-Kette.

6. Film oder Schicht nach einem der voranstehenden Ansprüche, worin in den Formeln (I) oder (II) sowohl R als auch R' Arylgruppen sind, vorzugsweise direkt an die Gruppe P gebunden, und/oder worin in den Formeln (III) oder (IV) R¹ und R^{1'} ausgewählt sind unter direkt an Q gebundenen Arylgruppen und -C(O)O- und -(CO)NR³-Gruppen, in denen R³ H oder eine gegebenenfalls substituierte Alkyl- oder Arylgruppe ist.

7. Film oder Schicht nach einem der Ansprüche 1 bis 5, worin die mindestens eine photoempfindliche Verbindung ausgewählt ist unter Monoazo-Verbindungen, Bisazo-Verbindungen, Trisazo-Verbindungen und vorzugsweise unter Azobenzolen, Bisazobenzolen, Trisazobenzolen, und weiterhin unter Stilbenen, Cinnamaten, Iminen, Anthracenen, Cumarinen, Chalconen, p-Phenylendiacrylaten oder -diacrylamiden, Thymin-Derivaten, Cytosin-Derivaten, Merocyaninen/Spiropyranen, Derivaten von Maleinsäureanhydrid und Anthracen.

8. Film oder Schicht nach einem der voranstehenden Ansprüche, worin [T]ⁿ⁻ ionische Gruppen enthält, ausgewählt unter -P(OH)O₃⁻, -PO₄²⁻, -PO₄⁻, -SO₄⁻, -SO₃⁻, -CO₂⁻-, oder worin [T]ⁿ⁺ ionische Gruppen enthält, ausgewählt unter -NR³₃⁺, -C=NR³₂, - C=NR³, worin R³ Wasserstoff oder Alkyl mit 1 bis 3 Kohlenstoffatomen ist, -P⁺R⁴_{3,} worin R⁴ entweder die Bedeutung von R³ hat oder OR³, N⁺≡N oder ein N-haltiges Heteroatom-Ringsystem ist.

9. Film oder Schicht nach einem der voranstehenden Ansprüche, worin [T]ⁿ⁺ oder [T]ⁿ⁻ ausgewählt ist unter einem geladenen Amphiphilen, ausgewählt unter Fettsäuren, teilweise hydrolysierten Triglyceriden, Tetraalkylammonium- oder protonierten Trialkylammonium-Verbindungen mit einer, zwei oder drei Alkylgruppen mit mindestens 6 Kohlenstoffatomen, hydrophoben Farbstoffen, und/oder worin [T]ⁿ⁺ oder [T]ⁿ⁻ eine funktionelle Gruppe enthalten kann, die in der Lage ist, organische, vorzugsweise photochemische Reaktionen einzugehen, stärker bevorzugt ausgewählt unter Farbstoffen, photochromen Gruppen oder photopolymerisierbaren Gruppen, am stärksten bevorzugt ausgewählt unter Acrylaten, Methacrylaten und Epoxiden, und/oder worin [T]ⁿ⁺ oder [T]ⁿ⁻ ausgewählt ist unter geladenen, eine Azobenzolgruppe enthaltenden oberflächenaktiven Mitteln.

10. Film oder Schicht nach einem der voranstehenden Ansprüche, enthaltend mindestens einen Zusatz, der die Eigenschaften des Materials modifiziert, vorzugsweise ausgewählt unter organischen Polymeren, Verbindungen mit filmbildenden Eigenschaften, Plastifizierern, Flüssigkristallen und anderen photoempfindlichen Verbindungen als denjenigen, die in Anspruch 1 definiert sind, worin der Zusatz dann, wenn er ein organisches Polymer ist, vorzugsweise in einer Menge von bis zu etwa 95 Gew.-% des photempfindlichen Materials vorhanden ist.

11. Film oder Schicht nach einem der voranstehenden Ansprüche, wobei mindestens zwei Komplexe, ausgewählt unter denjenigen der Formeln (I) bis (IV), in dem Film vorhanden sind.

12. Film oder Schicht nach einem der voranstehenden Ansprüche, der ein Muster aufweist oder strukturiert ist.

13. Film oder Schicht nach einem der voranstehenden Ansprüche mit einer Dicke von etwa 10 nm bis etwa 40 µm, vorzugsweise bis etwa 10 µm.

14. Film oder Schicht nach einem der voranstehenden Ansprüche, worin der Film bzw. die Schicht ein Film- oder Schicht-Stapel ist, der mehr als einen Film bzw. mehr als eine Schicht aus dem photoempfindlichen Material wie in Anspruch 1 definiert aufweist, worin entweder die genannten Filme oder Schichten direkt aneinander anliegen oder worin jeder der Filme oder Schichten, die das photoempfindliches Material enthalten, von einem anderen solchen Film oder einer anderen solchen Schicht durch eine Schutzschicht getrennt ist, wobei die Schutzschicht ein beliebiges Polymer enthält oder aus einem solchen Polymer besteht, das aus einem Lösungsmittel abgeschieden wurde, in welchem der oder die Komplexe der Formeln (I) bis (IV), der/die in dem Film bzw. der Schicht unterhalb der Schutzschicht eingesetzt ist/sind, nicht löslich ist, während der Film bzw. die Schicht aus photoempfindlichem Material wie in Anspruch 1 definiert, der/die sich oberhalb der Schutzschicht befindet, aus einem Lösungsmittel abgeschieden wurde, in welchem die genannte Schutzschicht nicht löslich ist.

15. Film oder Schicht nach einem der voranstehenden Ansprüche, dessen/deren Material fähig ist, infolge von Bestrahlung mit Licht mindestens eine optische Eigenschaft zu ändern, wobei diese Eigenschaft vorzugsweise ausgewählt ist unter Doppelbrechung, Dichroismus, Lichtbrechung oder Fluoreszenz-Anisotropie.

16. Film oder Schicht nach Anspruch 15, der/die derart bestrahlt wurde, dass seine/ihre optischen Eigenschaften entweder
(a) durch das Material hindurch homogen sind oder
(b) durch das Material hindurch oder durch beschränkte Bereich davon variieren.

17. Film oder Schicht nach Anspruch 16, Variante (b), in welchem/welcher optische Eigenschaften in einer, zwei oder drei Raumrichtungen moduliert sind, einschließlich der Richtung, die rechtwinklig zur Filmebene liegt, einer beliebigen Richtung in der Filmebene oder entlang einer Achse, die gegenüber der Filmebene verkippt ist.

18. Film oder Schicht nach einem der Ansprüche 15 bis 17, der/die die Eigenschaften eines Lichtpolarisations-Films oder einer lichtausrichtenden Schicht für ein Flüssigkristallmaterial besitzt, wobei der Film auf einem lichtdurchlässigen Träger angeordnet ist und der Träger vorzugsweise ausgewählt ist unter einem Polymerfilm, einer Glasplatte oder einer lichtdurchlässigen Elektrode.

19. Film oder Schicht nach Anspruch 18, worin der Lichtpolarisations-Film einen Absorptions-Gipfelpunkt bei zwischen 400 und 800 nm oder im NIR oder im IR oder im UV aufweist, und/oder worin das dichroitische Verhältnis bei der Wellenlänge der Gipfelpunkt-Absorption nicht unter 10 liegt.

20. Film oder Schicht nach einem der Ansprüche 18 oder 19 mit einem Mikromuster mit einer minimalen Breite in der Filmebene von mindestens 0,4 Mikrometer, vorzugsweise 1 Mikrometer bis 500 Mikrometer, worin die gerasterten (gepixelten) Bereiche dieses Films eine unterschiedliche Größe aufweisen und hinsichtlich ihrer relativen Positionen unterschiedlich sein können.

21. Film oder Schicht nach einem der Ansprüche 15 bis 17 mit den Eigenschaften eines optischen Datenspeichermediums, wobei der Film oder die Schicht vorzugsweise auf einem lichtdurchlässigen Substrat angeordnet ist, das gegebenenfalls bereits mit einer oder mehreren reflektierenden Schichten beschichtet wurde und auf dessen Oberfläche eine mit Hilfe von Licht beschreibbare Informationsschicht, fakultativ eine oder mehrere Reflexionsschichten und gegebenenfalls eine Schutzschicht oder ein weiteres Substrat oder eine Deckschicht aufgebracht sind.

22. Film oder Schicht nach Anspruch 21, worin die Daten des Speichermediums mit Hilfe von Licht aufgezeichnet und gelesen werden können, vorzugsweise mit Hilfe von Laserlicht, derart, dass das Speichermedium bei der Speicheroperation lokal reorientiert wird und die Information mit Hilfe einer lokalen Veränderung der molekularen Ordnung gespeichert wird.

23. Verfahren zur Herstellung eines Films oder einer Schicht nach einem der voranstehenden Ansprüche, umfassend die folgenden Schritte:
(a) Auflösen eines Komplexes mit einer der Formeln (I) bis (IV) wie in Anspruch 1 definiert oder einer Mischung solcher Komplexe in einem organischen Lösungsmittel, in welchem er/sie löslich ist, oder Aufwärmen des-/derselben, bis er/sie sich in einem viskosen Zustand befindet,
(b) Herstellen eines homogenen Films aus der gemäß Schritt (a) erhaltenen Lösung oder des dabei erhaltenen, viskosen Materials, entweder in Form eines durchgehenden Films oder mit einem vorgegebenen Muster, und
(c) Trocknen oder Abkühlen des Films.

24. Verfahren zum Herstellen eines Films oder einer Schicht gemäß Anspruch 10 oder eines davon abhängigen Anspruchs, umfassend die folgenden Schritte:
(a) Auflösen eines Komplexes mit einer der Formeln (I) bis (IV) wie in Anspruch 1 definiert oder einer Mischung solcher Komplexe in einem organischen Lösungsmittel, in welchem er/sie löslich ist, oder Aufwärmen des-/derselben, bis er/sie sich in einem viskosen Zustand befindet,
(b) Mischen der in Schritt (a) erhaltenen Lösung oder des dabei erhaltenen viskosen Material mit dem genannten Zusatz,
(c) Herstellen eines homogenen Films aus der gemäß Schritt (b) erhaltenen Mischung, vorzugsweise durch Spin-Coating, Drucken, Gießen, Aufrakeln oder Tauchen, entweder in Form eines durchgehenden Films oder mit einem vorgegebenen Muster, und
(d) Trocknen oder Abkühlen des Films.

25. Verfahren nach einem der Ansprüche 23 oder 24, worin der bzw. die in Schritt (a) eingesetzte(n) Komplex(e) durch die folgenden Schritte erhalten wird:
(e) getrenntes Auflösen mindestens eines Salzes einer der photoempfindlichen tektonischen Einheiten wie in den Formeln (I) bis (IV) definiert und mindestens eines Salzes einer der tektonischen Einheiten [T] wie in den Formeln (I) bis (IV) definiert in Wasser,
(f) Vereinigen der genannten Lösungen in einem molaren Verhältnis, der demjenigen in dem/den zu erzeugenden Komplex(en) der Formeln (I) bis (IV) entspricht, und
(g) Gewinnen des festen Komplexes oder der Mischung von Komplexen der Formel(n) (I) bis (IV) aus der Lösung.

26. Verfahren zum Herstellen eines Films oder einer Schicht gemäß Anspruch 16, Variante (a), umfassend das Herstellen eines Films wie in einem der Ansprüche 23 bis 25 definiert und Bestrahlen des Films oder eines Teils davon mit einem homogenen Lichtfeld.

27. Verfahren zum Herstellen eines Films oder einer Schicht gemäß einem der Ansprüche 16, Variante (b) und 17, umfassend die Herstellung eines Films wie in einem der Ansprüche 23 bis 25 definiert und Bestrahlen des Films oder eines Teils davon mit einem inhomogenen Lichtfeld, das von einer Maske oder von einem durch mindestens zwei einander schneidende, kohärente Strahlenbündel erzeugten Interferenzmuster gebildet wird.

28. Verfahren nach den Ansprüchen 26 oder 27, worin entweder die Wellenlänge, die Bestrahlungszeit, die Anzahl der Strahlenbündel und/oder die Polarisation, die Intensität, der Einstrahlwinkel mindestens eines der Strahlenbündel variiert wird, um die Richtung, den Wert und/oder die Modulationsart der erzeugten optischen Anisotropie zu steuern.

29. Verfahren nach den Ansprüchen 27 oder 28, weiterhin umfassend das Variieren des Maskenabstands oder der Periode, der Intensität oder der Polarisation des Interferenzmusters, um die räumliche Modulation der optischen Aniostropie zu steuern.

30. Verfahren zum Herstellen eines Films oder einer Schicht gemäß einem der Ansprüche 16, Variante (b) und 17, umfassend das Herstellen eines Films wie in einem der Ansprüche 23 bis 25 definiert und das inhomogene Bestrahlen dieses Films, vorzugsweise durch eine Maske, mit einem fokussierten Strahlenbündel, mit einem Nahfeld oder mit einem Interferenzmuster aus mindestens zwei einander schneidenden, kohärenten Strahlenbündeln.

31. Verfahren nach Anspruch 26 oder 30, worin die Bestrahlung makroskopisch und/oder mikroskopisch erfolgt und worin die Bestrahlung mit oder ohne Kombination mit einer elektrischen, magnetischen oder thermischen Behandlung oder einer solchen mit einem oberflächenaktiven Feld erfolgt, wobei eine selektive Veränderung der spezifischen Anordnung oder Orientierung des genannten ionischen, sich selbst ausrichtenden Komplexes eintritt und im Temperaturbereich des kristallinen oder flüssigkristallinen Zustand des Komplexes eingefroren wird, wenn die Bestrahlung beendet ist.

32. Verfahren nach einem der Ansprüche 23 bis 25, worin der Film aus mindestens zwei photoempfindlichen Schichten und gegebenenfalls einer oder mehreren Schutzschichten besteht und worin die Ausrichtung für jede einzelne Schicht getrennt nach ihrer Abscheidung erfolgt.

33. Verfahren nach einem der Ansprüche 23 bis 25, worin der Film aus mindestens zwei photoempfindlichen Schichten und gegebenenfalls einer oder mehreren Schutzschichten besteht und worin die Ausrichtung aller Schichten gleichzeitig durch ihre gemeinsame Bestrahlung erfolgt.

34. Verwendung eines Films oder einer Schicht wie in einem der Ansprüche 1 bis 22 beansprucht als photoempfindliches Medium, Polarisationselement, Lichtretardationselement, photoausrichtende Schicht für einen Flüssigkristall, optisches Element, funktionelle Oberfläche, Lichtbeugungselement, fokussierendes Element oder als beliebige Kombination dieser Elemente.

35. Verwendung eines Materials wie in Anspruch 16 definiert, worin die lichtinduzierte Eigenschaft reversibel ist, als Element für optisches oder optisch-thermisches Schalten, oder worin die lichtinduzierte Eigenschaft reversibel oder irreversibel ist, als Medium für reversible und irreversible Holagraphie, digitales Speichern optischer Daten oder optische Informationsverarbeitung in Echtzeit.

36. Verwendung nach Anspruch 34, worin das photoempfindliche Medium ein Medium für die irreversible oder reversible optische Datenspeicherung ist.

37. Verwendung nach Anspruch 35, worin die eingeschriebene Information durch Bestrahlen oder Erwärmen wieder eliminiert werden kann, worauf ein weiterer Schreibzyklus möglich ist.

38. Verfahren für die reversible optische Datenspeicherung in einem optischen Datenspeichermedium gemäß Anspruch 21, umfassend die Schritte:
(a) Speichern von Information durch Bestrahlung des genannten Films mit einer Lichtquelle mit oder ohne Kombination einer elektrischen, magnetischen oder thermischen Behandlung oder einer Behandlung mit einem oberflächenaktiven Feld;
(b) Auslesen der gespeicherten Information aus der Vorrichtung durch Bestrahlen des Films mit einer Lichtquelle;
(c) Löschen der gespeicherten Information durch Wärme und/oder durch Licht.

## Revendications

1. Film ou couche de matériau photosensible autonome ou soutenu(e) par un substrat contenant un complexe hydrosoluble présentant une des formules sommes (I) à (IV) suivantes : 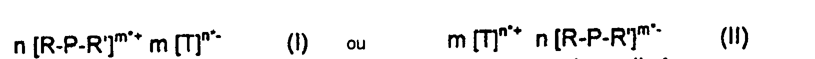 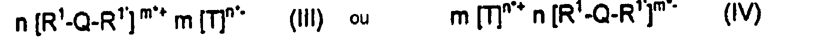 dans lesquelles
[R-P-R'] et [R¹-Q-R^{1'}] représentent respectivement des unités tectoniques photosensibles dont la partie photosensible peut subir une photoréaction choisie parmi les photo-isomérisations, les photocycloadditions et les réarrangements photo-induits et dans lesquelles
P représente un groupe apte à la photo-isomérisation,
Q représente un groupe apte à participer à une réaction de photocycloaddition ou de réarrangement photo-induit, ou à une réaction de photo-oxydation, au moins R ou R' est choisi parmi les groupes aromatiques facultativement substitués ou fonctionnalisés, et au moins R ou R' est chargé positivement ou négativement, à condition que P représente -N=N-, et que R et R' soient choisis indépendamment parmi des groupes aromatiques facultativement substitués ou fonctionnalisés, et à condition que si P représente autre chose, celui de R et de R' qui reste puisse être ou contenir en variante un groupe aliphatique linéaire ou ramifié, R¹ et R^{1'} sont choisis indépendamment parmi des groupes facultativement substitués ou fonctionnalisés, les deux ou au moins l'un des deux étant un groupe aromatique facultativement substitué ou fonctionnalisé, l'autre pouvant être ou contenir en variante un groupe aliphatique linéaire ou ramifié, ou parmi des groupes qui forment avec Q un système aromatique, à condition que, soit au moins R¹ ou R^{1'} soit chargé positivement ou négativement, soit la structure cyclique et/ou un substituant sur cette structure porte au moins une charge négative ou positive,
[T] représente une unité organique tectonique portant au moins un groupe chargé positivement ou négativement et au moins un groupe hydrophobe et
m, m*, n et n* peuvent être choisis librement à condition que les valeurs de m et m* soient identiques ou ne diffèrent pas plus de 10 % l'une de l'autre et que les valeurs de n et de n* soient identiques et ne diffèrent pas plus de 10 % l'une de l'autre, ou que les valeurs de n·m* et n*·m soient identiques ou ne diffèrent pas plus de 10 % l'une de l'autre,
ou contenant un mélange de ces complexes.

2. Film ou couche selon la revendication 1, dans lequel/laquelle
(a) le groupe P ou le groupe Q des formules (I) à (IV) sont choisis parmi -N=N-, -CR²=CR^{2'} -, R², R^{2'} étant choisis indépendamment parmi H, CN ou un groupe alkyle en C₁-C₄, ou
(b) dans lequel/laquelle le groupe P ou le groupe Q des formules (I) à (IV) sont un groupe contenant plusieurs fragments -N=N- et/ou -CR²=CR^{2'} dans un système conjugué d'électrons, ou
(c) dans lequel/laquelle R¹ et R^{1'} sont choisis indépendamment parmi des entités ayant plusieurs groupes aliphatiques facultativement substitués ou fonctionnalisés et/ou plusieurs groupes contenant un aryle facultativement substitués ou fonctionnalisés et des entités ayant plusieurs groupes qui, conjointement avec un ou plusieurs groupes Q, forment un noyau aryle ou un noyau hétéroaryle.

3. Film ou couche selon la revendication 1 ou 2, dans lequel/laquelle un élément parmi R ou R' ou bien parmi R¹ ou R^{1'} contient au moins un fragment supplémentaire comprenant un ou plusieurs groupes -N=N- et/ou -CR²=CR^{2'}.

4. Film ou couche selon l'une quelconque des revendications 1 à 3, dans lequel/laquelle [T] contient un ou plusieurs groupes et le ou chacun desdits groupes hydrophobes contient au moins 6, de préférence au moins 10 atomes de carbone et/ou dans lequel/laquelle m, m*, n et n* sont choisis parmi ou parmi environ 1, 2, 3, 4, 5, 6, 7 ou 8.

5. Film ou couche selon la revendication 4, dans lequel/laquelle le(s) groupe(s) hydrophobe(s) est/sont (a) une ou plusieurs chaîne(s) hydrocarbonée(s) linéaire(s) ou ramifiée(s), choisie(s) parmi un groupe alkyle, alcényle, aryle ou arylalkyle facultativement substitué ou fonctionnalisé ou bien est/sont une chaîne oxyde de polyalkylène, de préférence une chaîne oxyde de polyéthylène ou oxyde de polypropylène.

6. Film ou couche selon l'une quelconque des revendications précédentes, dans lequel/laquelle, dans les formules (I) ou (II), R et R' sont tous deux des fragments aryle, de préférence directement fixés au groupe P, et/ou dans lequel/laquelle, dans les formules (III) ou (IV), R¹ et R^{1'} sont choisis parmi des fragments aryle directement fixés à Q et les groupes -C(O)O- et -(CO)NR³, où R³ est H ou un groupe alkyle ou aryle facultativement substitué.

7. Film ou couche selon l'une quelconque des revendications 1 à 5, dans lequel/laquelle le au moins un composé photosensible est choisi parmi des composés monoazoïques, des composés disazoïques, des composés trisazoïques et de préférence, parmi les azobenzènes, les disazobenzènes, les trisazobenzènes et encore à partir des stilbènes, des cinnamates, des imines, des anthracènes, des coumarines, des chalcones, des diacrylates ou diacrylamides de p-phénylène, des dérivés de thymine, des dérivés de cytosine, des mérocyanines/spiropyranes, des dérivés d'anhydride d'acide maléique et de l'anthracène.

8. Film ou couche selon l'une quelconque des revendications précédentes, dans lequel/laquelle [T]ⁿ⁻ comprend des groupes ioniques choisis parmi -P(OH)O₃⁻, -PO₄²⁻, -PO₄-, -SO₄⁻, -SO₃⁻, -CO₂⁻- ou [T]ⁿ⁺ comprend des groupes ioniques choisis parmi -NR³₃⁺, -C=NR³₂, -C≡NR³, où R³ est l'hydrogène ou un groupe alkyle ayant 1 à 3 atomes de carbone, -P⁺R⁴₃, où R⁴ désigne soit R³, soit OR³, N⁺≡N ou un système de noyau hétéroatomique contenant N.

9. Film ou couche selon l'une quelconque des revendications précédentes, dans lequel/laquelle [T]ⁿ⁺ ou [T]ⁿ⁻ est choisie à partir d'un amphiphile chargé, sélectionné parmi les acides gras, les triglycérides partiellement hydrolysés, les composés tétraalkylammonium ou trialkylammonium protonés ayant 1, 2 ou 3 groupes alkyle possédant au moins 6 atomes de carbone, les colorants hydrophobes et/ou dans lequel/laquelle [T]ⁿ⁺ ou [T]ⁿ⁻ peut contenir un groupe fonctionnel apte à supporter des réactions organiques, de préférence des réactions photochimiques, de manière davantage préférée choisi parmi les colorants, les groupes photochromiques ou les groupes photopolymérisables, de manière préférée entre toutes choisi parmi les acrylates, les méthacrylates et les époxydes, et/ou dans lequel/laquelle [T]ⁿ⁺ ou [T]ⁿ⁻ est choisi parmi des tensioactifs chargés contenant un groupe azobenzène.

10. Film ou couche selon l'une quelconque des revendications précédentes, comprenant au moins un additif qui modifie les propriétés du matériau, choisi de préférence parmi les polymères organiques, les composés présentant des propriétés filmogènes, les plastifiants, les cristaux liquides et les composés photosensibles différents de ceux tels que définis à la revendication 1, dans lequel/laquelle l'additif, s'il s'agit d'un polymère organique, est de préférence présent dans une quantité représentant jusqu'à 95 % en poids du matériau photosensible.

11. Film ou couche selon l'une quelconque des revendications précédentes, dans lequel/laquelle au moins deux complexes choisis parmi ceux des formules (I) à (IV) sont présents dans le film.

12. Film ou couche selon l'une quelconque des revendications précédentes, qui est tracé(e) ou structuré(e).

13. Film ou couche selon l'une quelconque des revendications précédentes ayant une épaisseur comprise entre environ 10 nm et environ 40 µm, de préférence d'environ 10 µm.

14. Film ou couche selon l'une quelconque des revendications précédentes, dans lequel/laquelle le film ou la couche est un empilement de films ou de couches comprenant plusieurs films ou couches de matériau photosensible tel(le)s que défini(e)s dans la revendication 1, dans lequel/laquelle lesdits films ou lesdites couches se font directement face ou bien chaque matériau photosensible contenant le film ou la couche est séparé d'un autre film ou d'une autre couche par une couche protectrice, la couche protectrice comprenant ou consistant en un polymère quelconque déposé à partir d'un solvant dans lequel le(s) complexe (s) des formules (I) à (IV) tel (s) qu'utilisé(s) dans le film ou la couche sous la couche protectrice est/sont insoluble(s) et le film ou la couche de matériau photosensible tel que défini dans la revendication 1 qui est placé(e) au-dessus de la couche protectrice étant déposé(e) à partir d'un solvant dans lequel ladite couche protectrice est insoluble.

15. Film ou couche selon l'une quelconque des revendications précédentes, dont le matériau est apte à changer au moins une propriété optique, de préférence choisie parmi la biréfringence, le dichroïsme, la réfraction ou l'anisotropie de fluorescence si on l'irradie avec un faisceau lumineux.

16. Film ou couche selon la revendication 15, irradié(e) de telle sorte que ses propriétés optiques soient
(a) homogènes sur l'ensemble du matériau ou
(b) variables sur l'ensemble du matériau ou bien dans des zones limitées de celui-ci.

17. Film ou couche selon la revendication 16, variante (b), dans lequel/laquelle les propriétés optiques sont modulées dans 1, 2 ou 3 dimensions y compris une modulation dans la direction perpendiculaire au plan du film, dans n'importe quelle direction dans le plan du film ou le long de l'axe incliné vers le plan du film.

18. Film ou couche selon l'une quelconque des revendications 15 à 17, ayant les propriétés d'un film polarisant la lumière ou d'une couche de photo-alignement pour cristal liquide, le film étant placé sur un support transparent, le support étant de préférence choisi parmi un film polymère, une plaque de verre ou une électrode transparente.

19. Film ou couche selon la revendication 18, dans lequel/laquelle le film polarisant la lumière présente un pic d'absorption compris entre 400 et 800 nm ou dans l'IR proche, dans l'IR ou dans l'UV et/ou un rapport dichroïque à la longueur d'onde d'absorption maximale d'au moins 10.

20. Film ou couche selon l'une quelconque des revendications 18 ou 19 présentant un micro-motif d'une largeur minimale dans le plan du film d'au moins 0,4 µm, de préférence de 1 µm à 500 µm, dans lequel/laquelle les régions pixellisées de ce film peuvent être de tailles différentes et avoir des positions relatives différentes.

21. Film ou couche selon l'une quelconque des revendications 15 à 17 présentant les propriétés d'un support de stockage de données optiques, le film ou la couche étant de préférence déposé(e) sur un substrat transparent ayant été déjà facultativement revêtu d'une ou plusieurs couches réfléchissantes et sur la surface duquel/de laquelle on applique une couche pour informations photo-enregistrables, facultativement une ou plusieurs couches réfléchissantes et facultativement une couche protectrice ou un substrat supplémentaire ou encore une couche supérieure.

22. Film ou couche selon la revendication 21, dans lequel/laquelle les données sur le support de stockage peuvent être enregistrées et lues grâce à un faisceau lumineux, de préférence un faisceau laser de telle sorte que, lors de l'opération de stockage, le support de stockage soit réorienté localement et les informations soient stockées grâce à une modification locale de l'agencement des molécules.

23. Procédé pour la préparation d'un film ou d'une couche selon l'une quelconque des revendications précédentes, comprenant les étapes suivantes consistant à :
(a) dissoudre un complexe ayant l'une quelconque des formules (I) à (IV) telles que définies dans la revendication 1 ou un mélange de ces complexes dans un solvant organique dans lequel il est soluble ou bien le chauffer jusqu'à lui conférer un état visqueux,
(b) préparer un film homogène à partir de la solution ou du matériau visqueux obtenu(e) à l'étape (a), soit sous forme de film continu, soit ayant un tracé préalablement conçu, et
(c) sécher ou refroidir ledit film.

24. Procédé pour la préparation d'un film ou d'une couche selon la revendication 10 ou l'une quelconque des revendications dépendantes, comprenant les étapes suivantes consistant à :
(a) dissoudre un complexe ayant l'une quelconque des formules (I) à (IV) telles que définies dans la revendication 1 ou un mélange de ces complexes dans un solvant organique dans lequel il est soluble ou bien le chauffer jusqu'à lui conférer un état visqueux,
(b) mélanger la solution ou le matériau visqueux obtenu(e) à l'étape (a) avec ledit additif,
(c) préparer un film homogène à partir du mélange obtenu à l'étape (b), de préférence par enduction centrifuge (spin coating), impression, coulage, application avec racloir ou immersion, soit sous forme de film continu, soit ayant un tracé préalablement conçu, et
(d) sécher ou refroidir ledit film.

25. Procédé selon l'une quelconque des revendications 23 ou 24, dans lequel le ou les complexes utilisés à l'étape (a) est/sont obtenus au cours des étapes suivantes consistant à :
(e) dissoudre séparément dans l'eau au moins un sel de n'importe laquelle des unités tectoniques photosensibles définies dans les formules (I) à (IV) et au moins un sel de n'importe laquelle des unités tectoniques [T] définies dans les formules (I) à (IV),
(f) combiner lesdites solutions dans un rapport molaire qui correspond au(x) complexe(s) des formules (I) à (IV) à obtenir, et
(g) récupérer à partir de ladite solution le complexe ou mélange de complexes solide de l'une quelconque des formules (I) à (IV).

26. Procédé pour la préparation d'un film ou d'une couche selon la revendication 16, variante (a), comprenant la préparation d'un film tel que défini dans l'une quelconque des revendications 23 à 25 et l'irradiation dudit film ou d'une partie de celui-ci avec un champ lumineux homogène.

27. Procédé pour la préparation d'un film ou d'une couche selon la revendication 16, variante (b) et 17, comprenant la préparation d'un film tel que défini dans l'une quelconque des revendications 23 à 25 et l'irradiation dudit film ou d'une partie de celui-ci avec un champ lumineux hétérogène, fourni par un masque ou par un motif d'interférence d'au moins deux faisceaux cohérents qui se coupent.

28. Procédé selon la revendication 26 ou 27, dans lequel la longueur d'onde, le temps d'irradiation, le nombre de faisceaux irradiants et/ou la polarisation, l'intensité, l'angle d'incidence d'au moins un faisceau irradiant est modifié (e) pour contrôler la direction, la valeur et/ou le type de modulation de l'anisotropie optique induite.

29. Procédé selon les revendications 27 ou 28, comprenant en outre la modification de l'espacement du masque ou de la période, de l'intensité ou de la polarisation du motif d'interférence afin de contrôler la modulation spatiale de l'anisotropie optique.

30. Procédé pour la préparation d'un film ou d'une couche selon les revendications 16, variante (b) et 17, comprenant la préparation d'un film tel que défini dans l'une quelconque des revendications 23 à 25 et l'irradiation hétérogène dudit film, de préférence à travers un masque, avec un faisceau focalisé, en champ proche ou avec un motif d'interférence d'au moins deux faisceaux cohérents qui se coupent.

31. Procédé selon la revendication 26 ou 30, dans lequel l'irradiation est macroscopique et/ou microscopique et dans lequel l'irradiation s'effectue en étant combinée ou non à un champ magnétique, électrique superficiellement actif ou à un traitement thermique, dans lequel la modification sélective de l'agencement ou de l'orientation spécial(e) dudit complexe ionique auto-assemblé se produit et est gelée, dans la fourchette de températures de l'état cristallin ou cristal liquide du complexe, une fois l'irradiation terminée.

32. Procédé selon l'une quelconque des revendications 23 à 25, dans lequel le film consiste en au moins deux couches photosensibles et facultativement en une ou plusieurs couches protectrices et dans lequel l'alignement est effectué indépendamment pour chaque couche après son dépôt.

33. Procédé selon l'une quelconque des revendications 23 à 25, dans lequel le film consiste en au moins deux couches photosensibles et facultativement en une ou plusieurs couches protectrices et dans lequel l'alignement de toutes les couches est effectué en même temps en les irradiant toutes ensemble.

34. Utilisation d'un film ou d'une couche selon l'une quelconque des revendications 1 à 22 sous forme de support photosensible, d'élément de polarisation, d'élément retardant la lumière, de couche de photo-alignement pour cristal liquide, d'élément optique, de surface fonctionnelle, d'élément de diffraction, d'élément de focalisation ou toute combinaison desdits éléments.

35. Utilisation d'un matériau selon la revendication 16, dans laquelle la propriété photo-induite est réversible, en tant qu'élément pour commutation optique ou thermo-optique, ou dans laquelle la propriété photo-induite est réversible ou irréversible, en tant que support pour holographie réversible et irréversible en temps réel, stockage de données optiques numériques ou traitement optique de l'information.

36. Utilisation selon la revendication 34, dans laquelle le support photosensible est un support pour stockage de données optiques irréversible ou réversible.

37. Utilisation selon la revendication 35, dans laquelle les informations écrites peuvent être supprimées par irradiation ou chauffage, après quoi un autre cycle d'écriture est possible.

38. Procédé de stockage de données optiques réversible sur un support de stockage de données optiques selon la revendication 21, comprenant les étapes consistant à :
(a) stocker des informations en irradiant ledit film avec une source de lumière combinée ou non à un champ magnétique, électrique superficiellement actif, ou à un traitement thermique ;
(b) lire les informations stockées à partir dudit dispositif en illuminant ledit film avec une source de lumière ;
(c) effacer lesdites informations stockées par chauffage et/ou avec la lumière.
